# EUROPEAN PATENT SPECIFICATION

(11) **EP 2 046 173 B1**
(45) Date of publication and mention of the grant of the patent: **22.01.2014**
(21) Application number: 07804602.6
(22) Date of filing: 12.07.2007
(51) Int. Cl.: A47J 31/44

(54) **DEVICE FOR ESPRESSO-LIKE INFUSIONS**
GERÄT FÜR ESPRESSOÄHNLICHE AUFGUSSGETRÄNKE
DISPOSITIF POUR INFUSIONS DE TYPE EXPRESSO

(30) Priority: 28.07.2006 IT BO20060569
(43) Date of publication of application: 15.04.2009
(73) Proprietor: Aroma System SRL, 40138 Bologna (IT)
(72) Inventor: RAPPARINI, Gino, I-40138 Bologna (IT)
(74) Representative: Stolmár & Partner
(86) International application number: PCT/IB2007/001960
(87) International publication number: WO 2008/015514

(56) References cited:
- FR-A- 2 849 760

## Description

### Field of the art

The present invention refers to the technological field specific of the equipments to make espresso-like infusions, included in the International Classification A 47j.

### State of the Art

Several types of equipments to obtain infuses like espresso are known. All the i known types present difficulties of realization and operation, and are complex, expensive and can only be used employing single-format packages of capsules or pads.

FR 28 49 760 discloses a device for espresso-like infusions characterized by a structure (Élément fixe with other fixed elements) provided with programmable mechanisms to heat up, distribute and inject water into the infusion process, and equipped with the two following operating elements:
- being the first operating element (bras) shaped as a rocking frame articulated on the fulcrums (liaisons pivot) attached to said structure around which it can perform angular excursions done with the special handle (levier);
- being the second operating element (Element mobile) shaped as a rocking cradle articulated around the fulcrums (pivots), attached to said structure around which it can perform said angular excursions matching but opposite with the respect to those done by the frame and actuated by means of at least one especially shaped slot (trous oblongs) preset on the side wall of said rocking frame in which a roll (doits de guidage) slides applied to the side of said rocking cradle.

None of the known equipments can be used alternatively to obtain infuses from loose substances or from substances packaged in pads or capsules of different formats.

The problem to be solved is exactly to realize a device that is affordable in the realization and versatile in the employment to be adapted indifferently and easily to the use of both loose products and of substances prepackaged in pads or capsules of different format.

The finding that is object of the present invention solves all together all the problems indicated above and presents considerable inexpensiveness of realization and a surprising versatility of application and ease in the practical domestic use.

From the device of FR 28 49 760 the subject-matter of the invention differs in that a third operational element interchangeable and shaped as a paddle composed by a concave spoon-like zone fit to contain loose substances or packaged in different formats and by an external handle to allow its steady insertion and the easy extraction by said rocking cradle and that the slot presents in the terminal trait a knee-like profile that ensures an irreversible stability to the stance of the frame and of the cradle closures, being such effect increased when the pressures of the infusion process liquid rises.

The invention is defined by the features of claim 1.

### Description

The invention is now illustrated with refecence to the figures of the drawings, attached as a mere example.

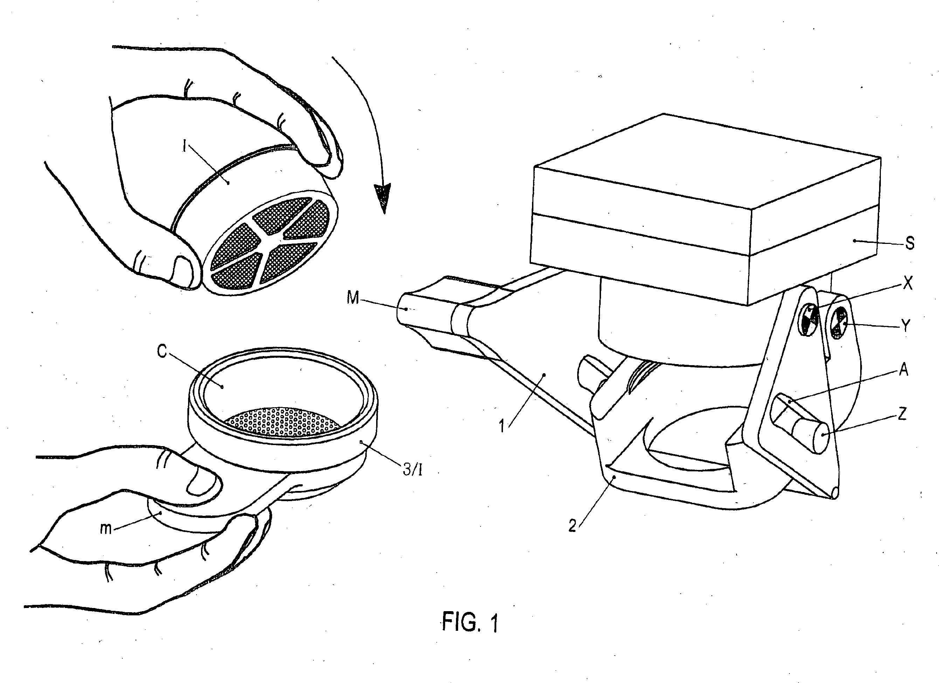

The axonometric figure 1, in its whole, highlights the introduction phase of a packaged capsule with a pre-set format (I) inside of an element (3/I) paddle-shaped with concave spoon-shaped part (C) featuring a geometry matching the one of the format of the capsule packaged with infusion substance such as ground coffee or other similar lyophilized product or water-soluble such as powder-milk.

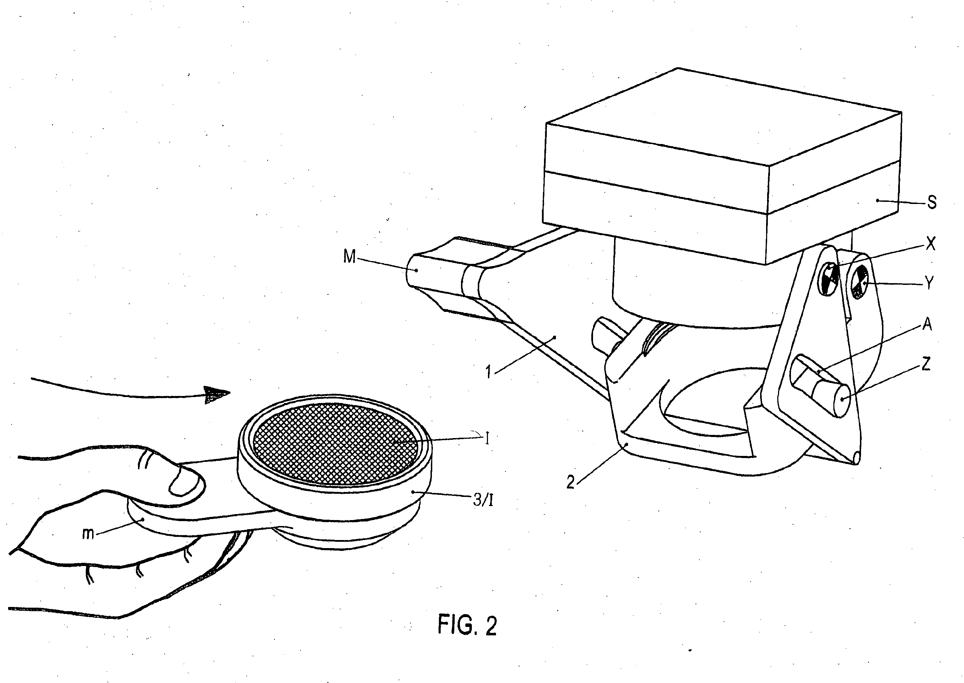

The axonometric figure 2, in its whole, shows the phase in which the paddle (3/I) comes closer to the swinging crib (2) articulated into the frame (1) in open position.

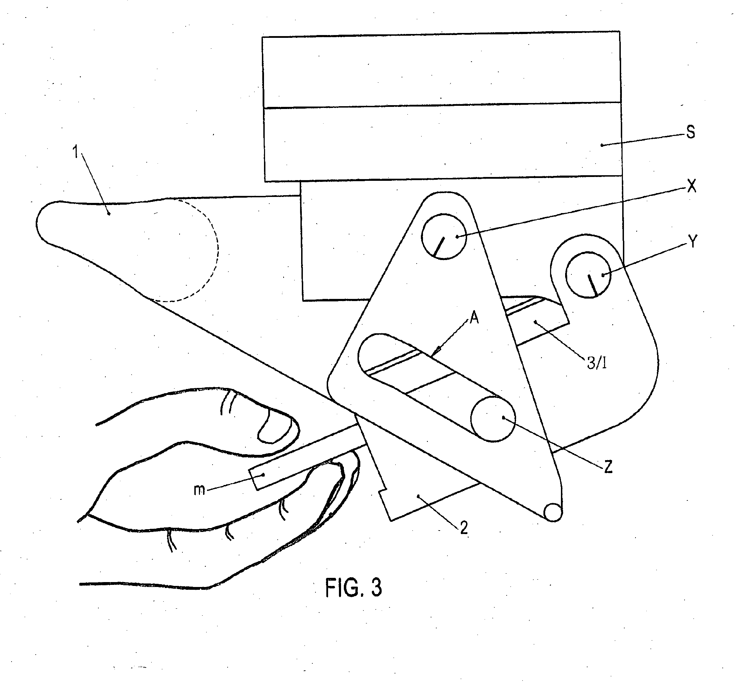

Figure 3 shows, in sideways view, the easy positioning of the paddle (3/1) that is manually inserted inside the swinging crib (2).

In said figure 3 are highlighted the angular positions of the frame (1) and of the swinging cradle (2), here represented in open position with the paddle (3/1) already inserted manually in said cradle (2).

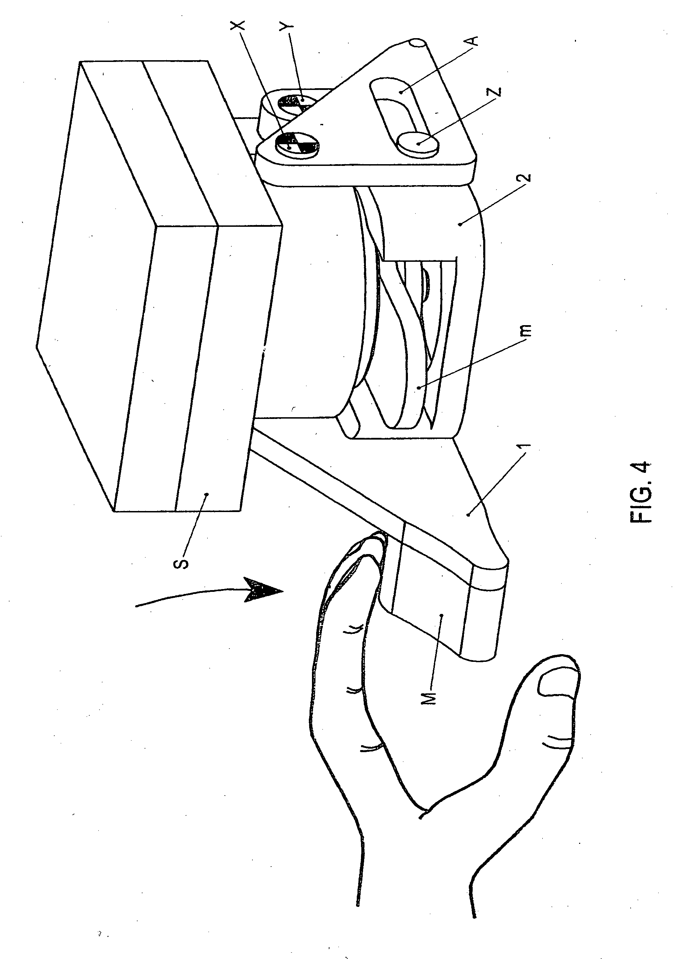

The axonometric figure 4 shows the device in a position of stable closure performed by lowering manually the handle (M). It should be noticed that the leftwards angular excursions of the frame (1) around the fulcrum (X) causes, through the slit (A), the rightwards rotation of the swinging cradle (2) around the fulcrum (Y) realizing the simultaneous hermetic closure of the paddle (3/1) and of the capsule (I) against the structure (S).

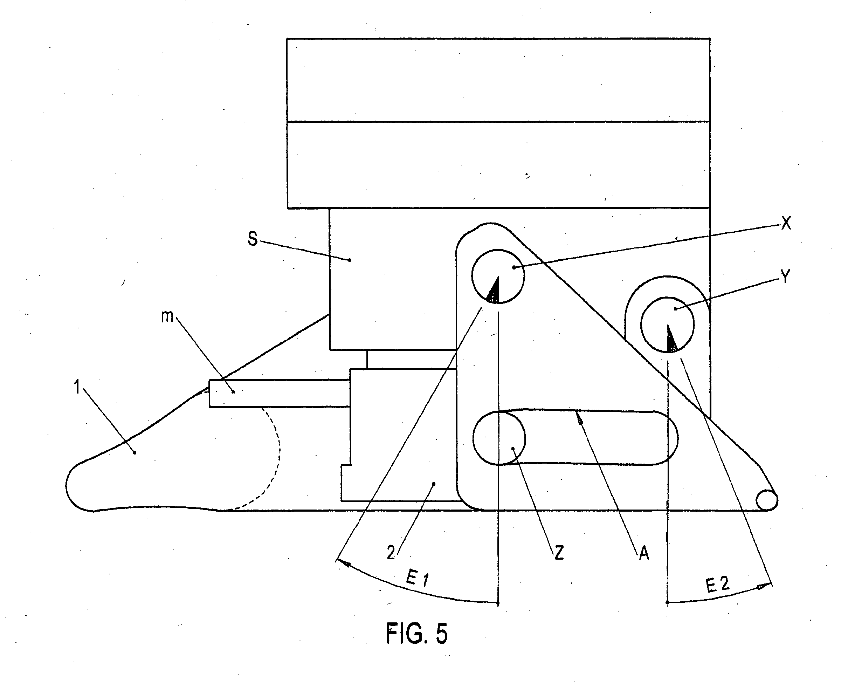

Figure 5 represents the sideways view of the closed position of the device steadily blocked and ready for the beginning of the infusion operations.

In said figure 5 are highlighted the (discordi) angular excursions (E1) around the fulcrum (X) and (E2) around the fulcrum (Y) of the frame (1) and of the cradle (2).

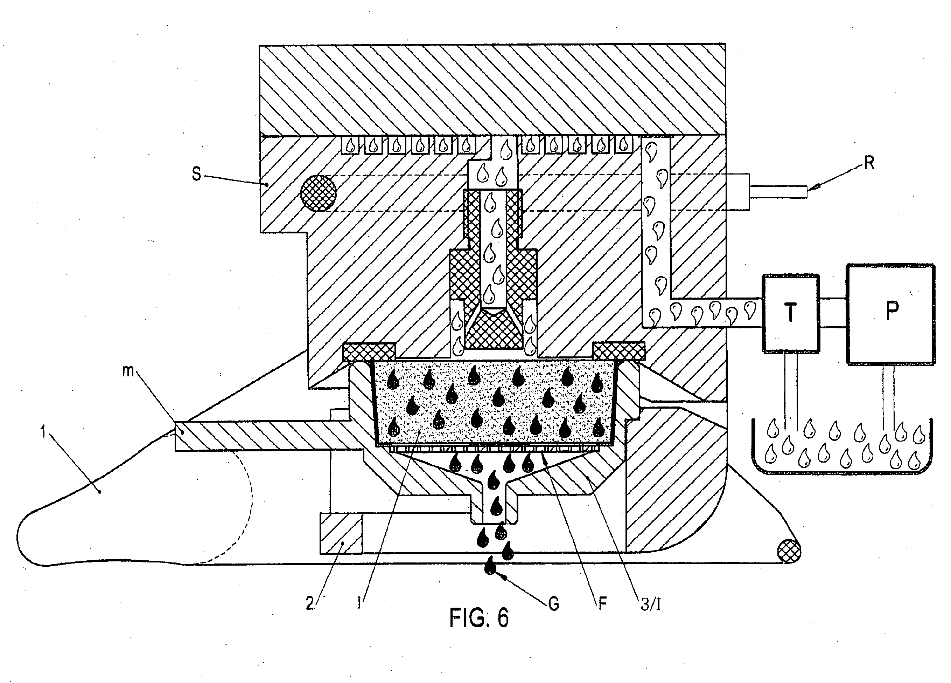

Figure 6 shows in detail the longitudinal section of the device blocked in a position of hermetic closing during the occurring of the infusion operation. It should be noticed the path of the water fed by the pump (P) through the valve (T), heated up by the resistance (R) and injected by pressure inside the substance to be infused.

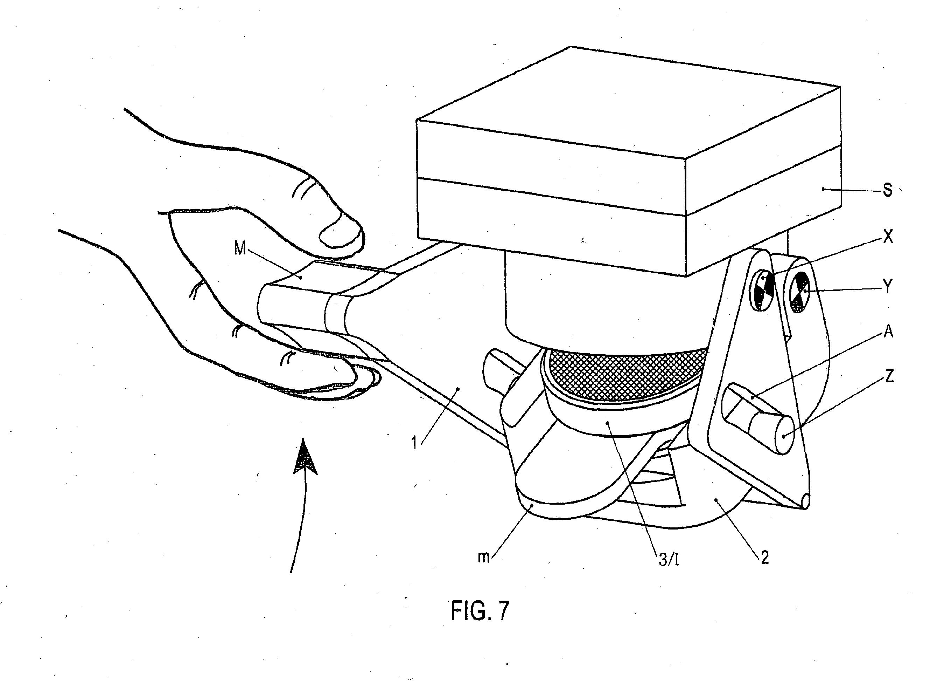

Figure 7 shows the manual opening of the frame (1) through he handle (M).

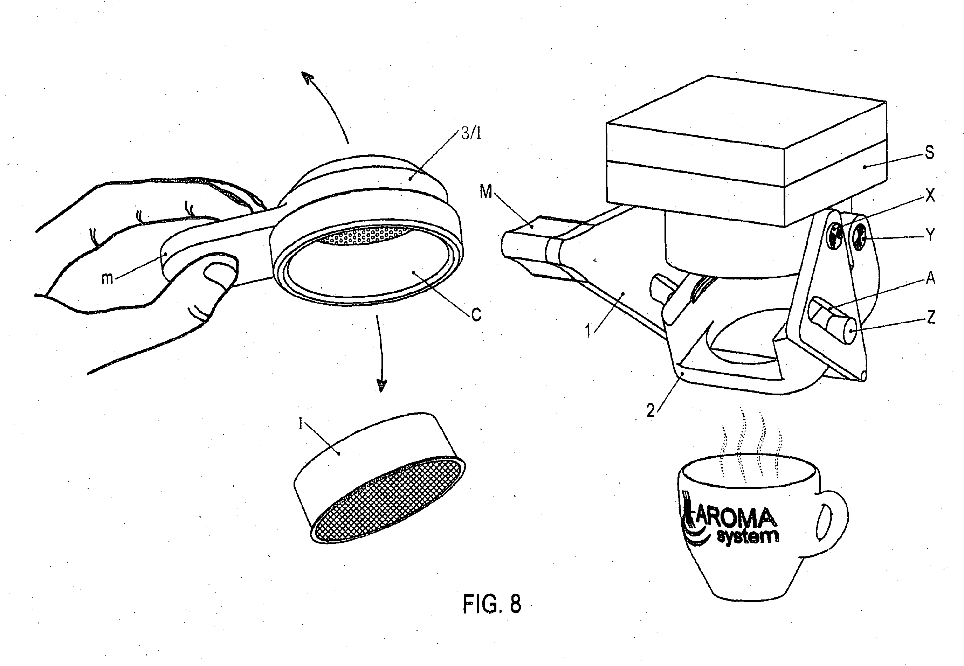

Figure 8 shows the ejecting phase of the paddle (3/I) of the capsule (I) already used to obtain the infuse introduced in the cup underneath.

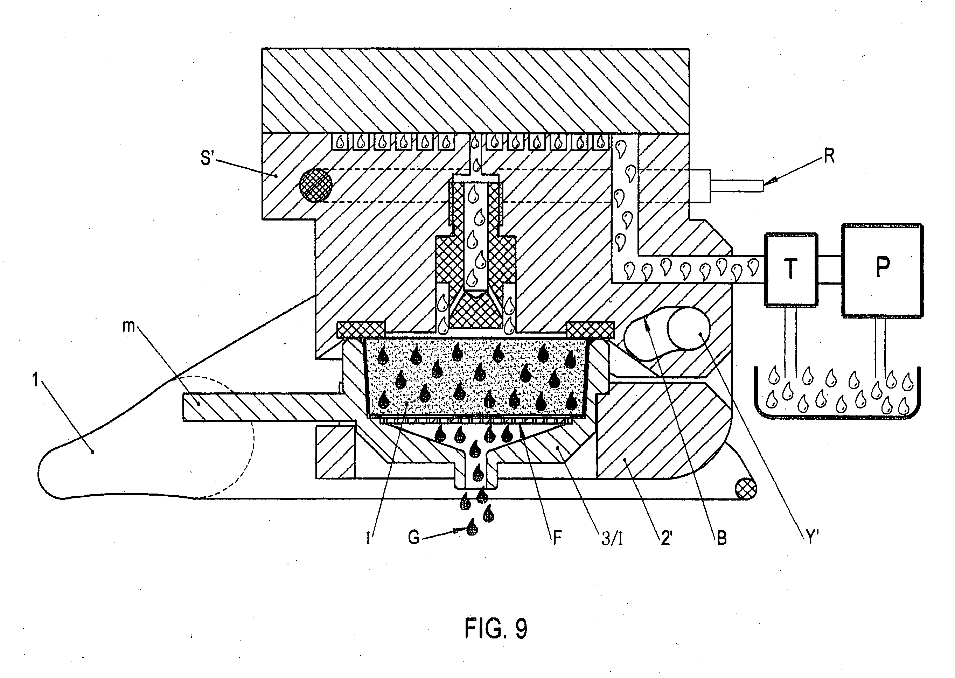

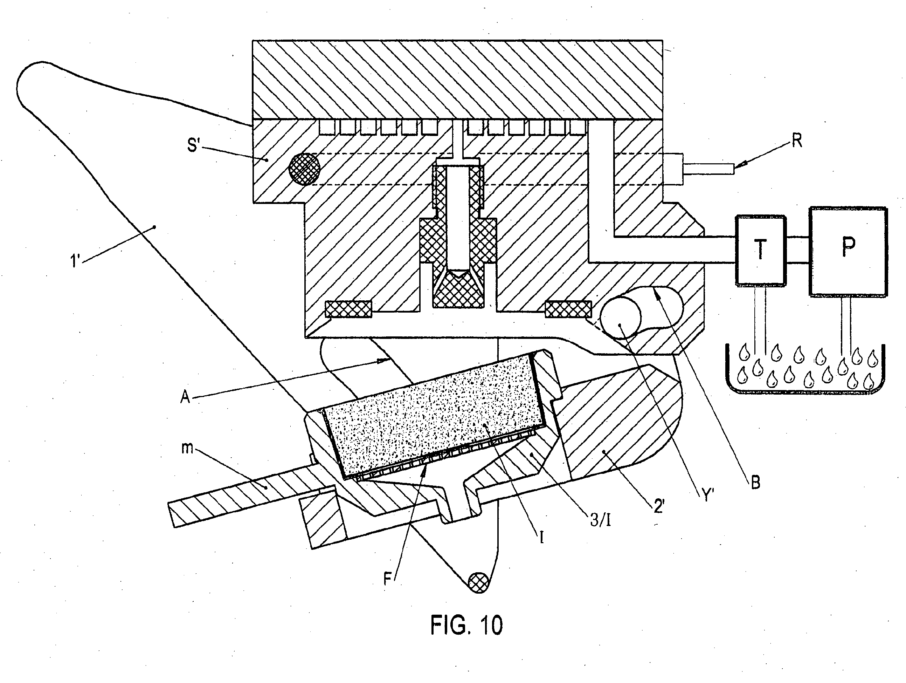

Figure 9 and 10 show emblematically an infusion process with the use of a capsule. In figure 9 and 10 it should be noticed the presence of a structure (S') of a shaped slot (B) that allows the cradic (2') to further open to optimize the accessibility of the paddle (3/I) during the insertion and extraction of the swinging cradle (2').

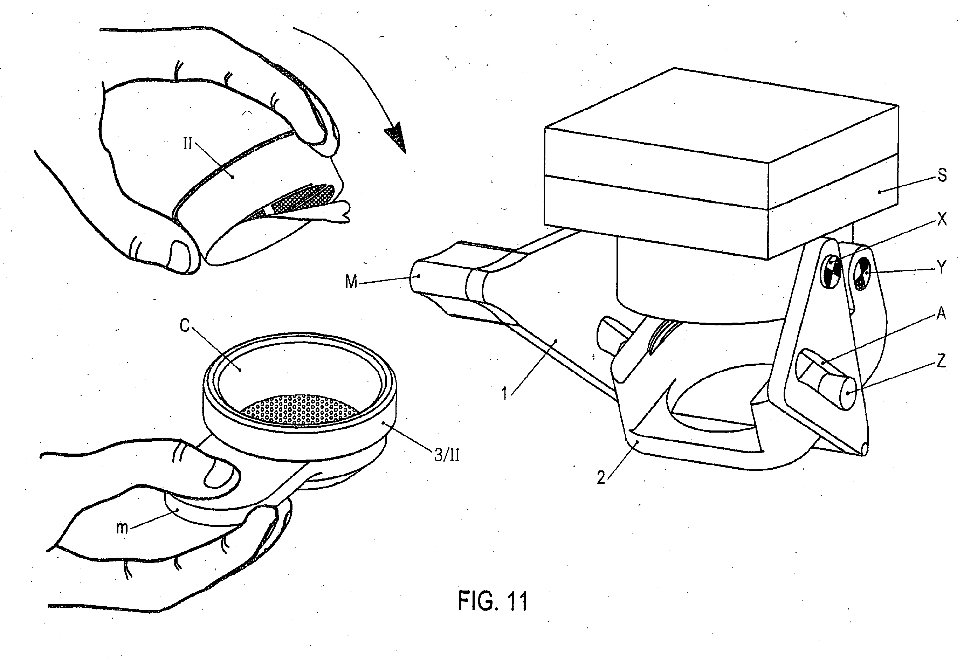

Figure 11 shows the employment of an hermetic capsule of format (II). It should be noticed that before being introduced inside the paddle (3/II), the hermetic film of the new capsule needs to be peeled off and removed from the bottom of said capsule.

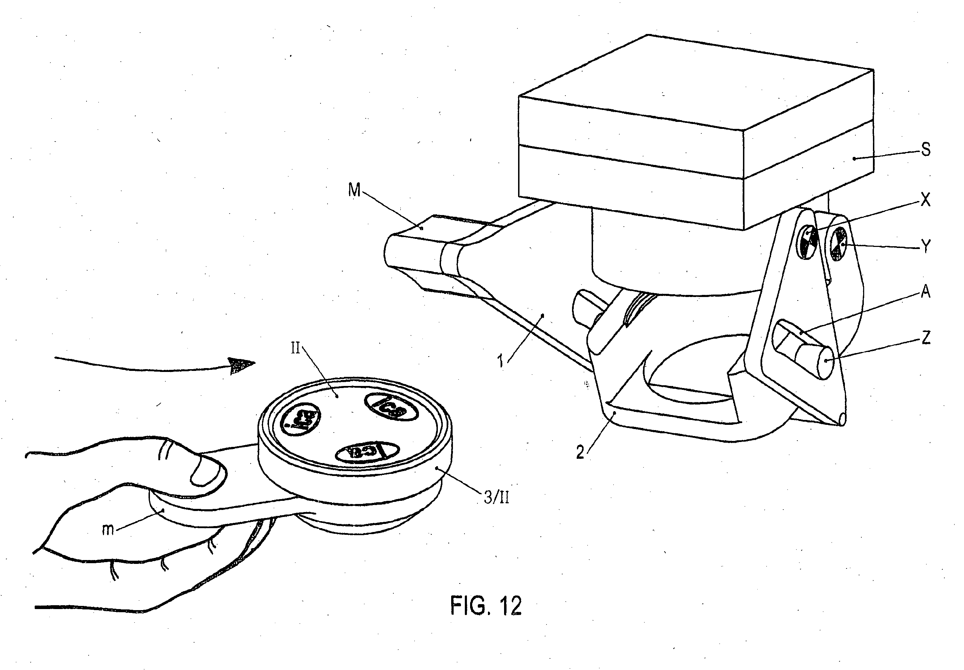

Figure 12 shows the easy introduction of the paddle of format (3/II) inside the open cradle (2). It should be noticed that the capsule (II) is covered with an fixed hermetic film.

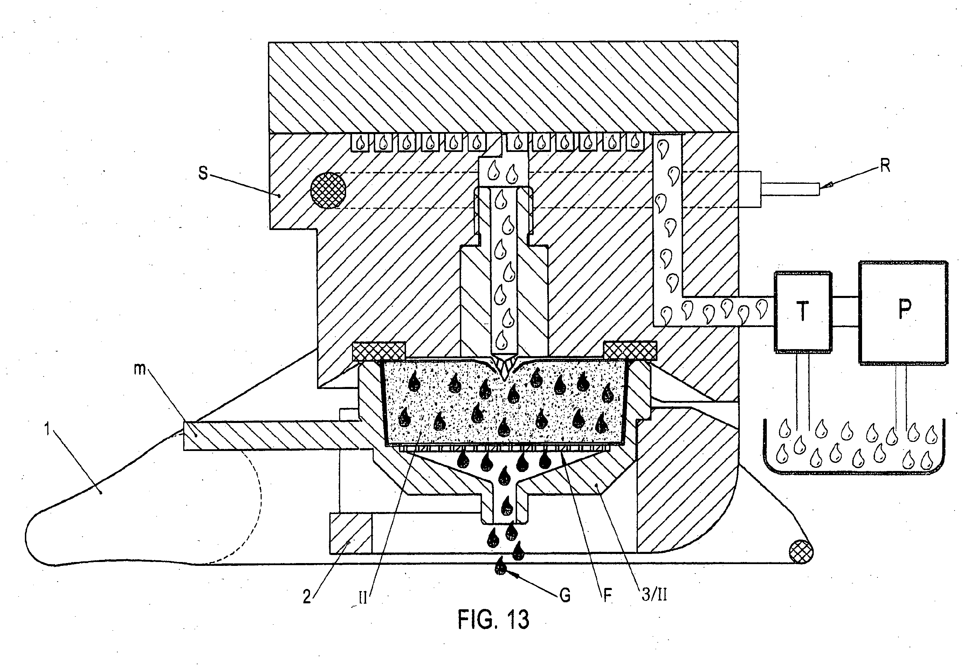

Figure 13 shows the section of the perforation phase of the upper hermetic film of the capsule of format (II).

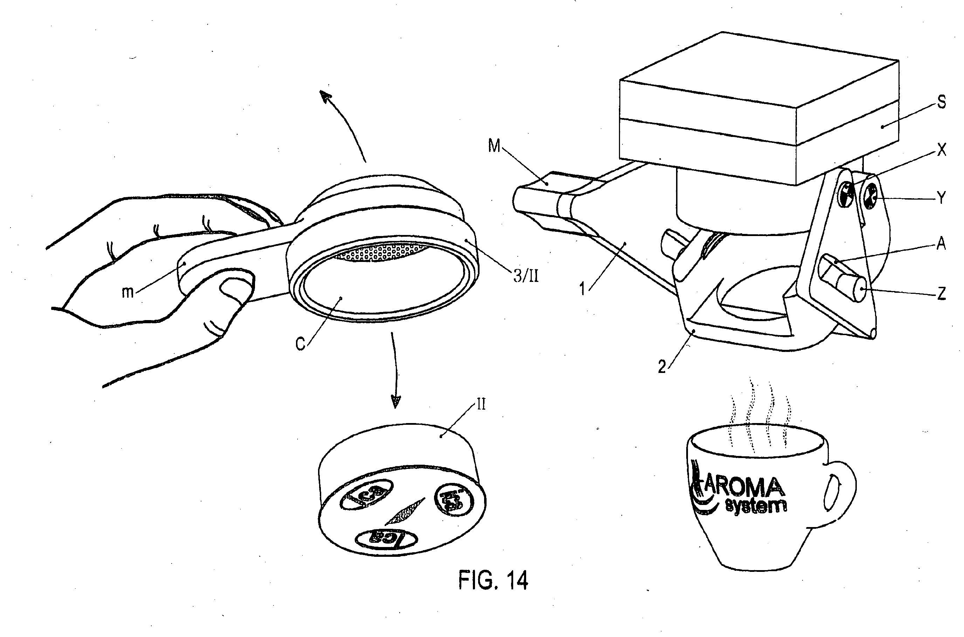

Figure 14 shows the phase of expulsion of the capsules used (II) that has produced the infusion (G).

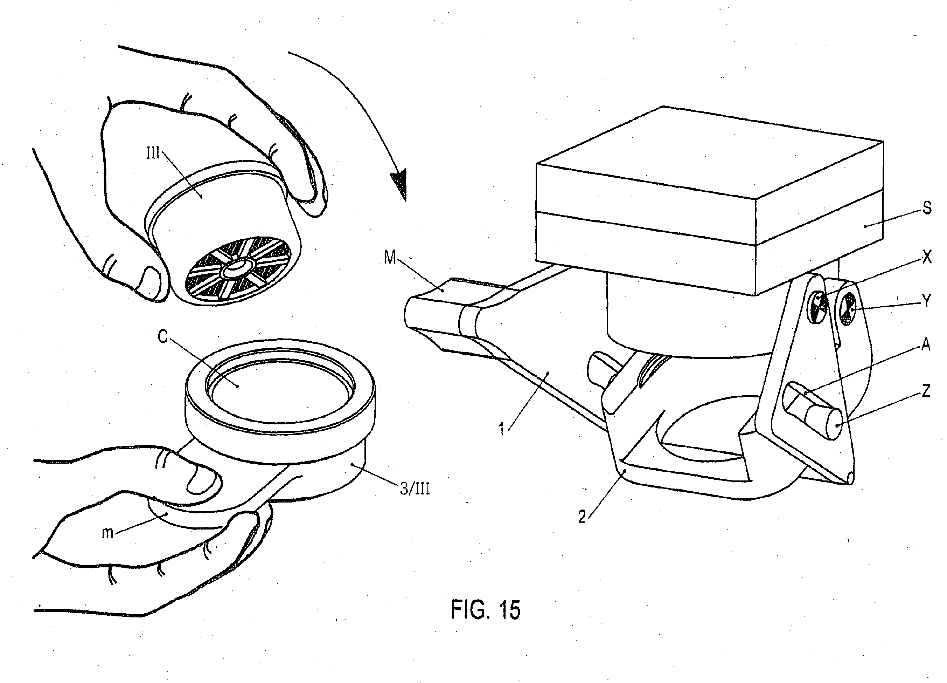

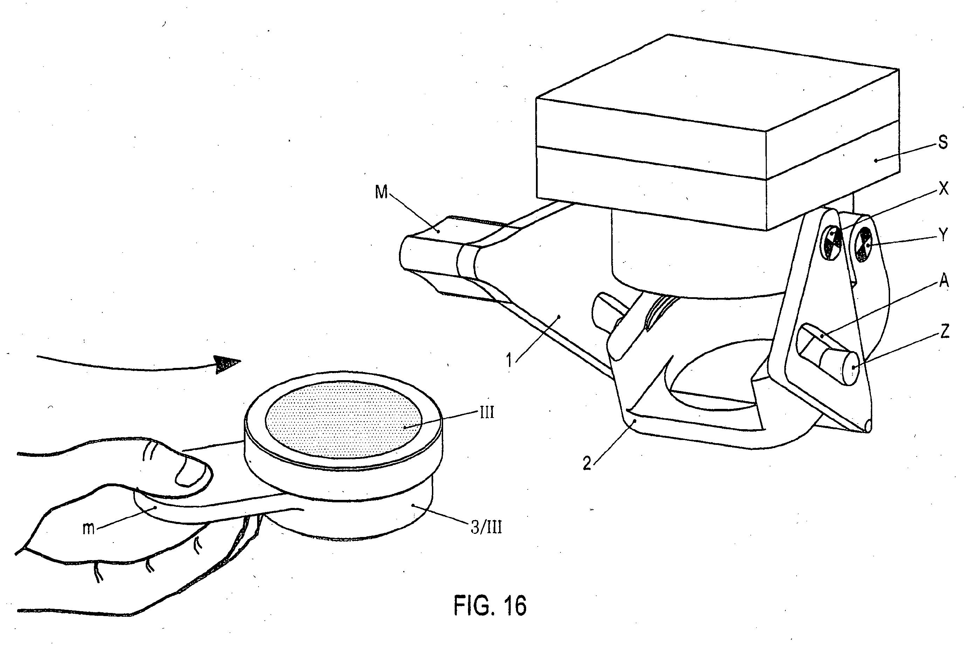

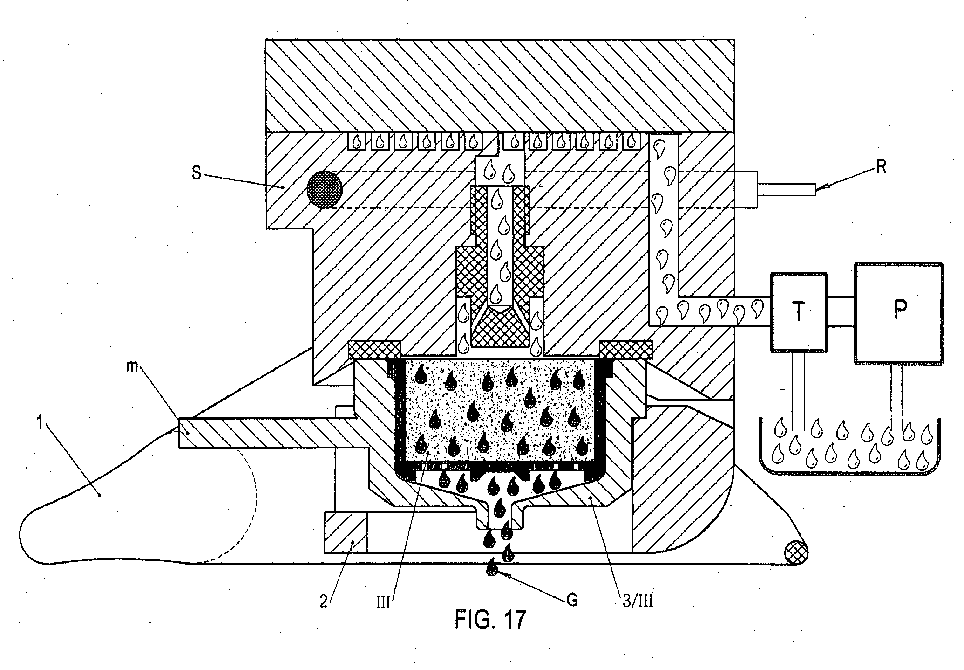

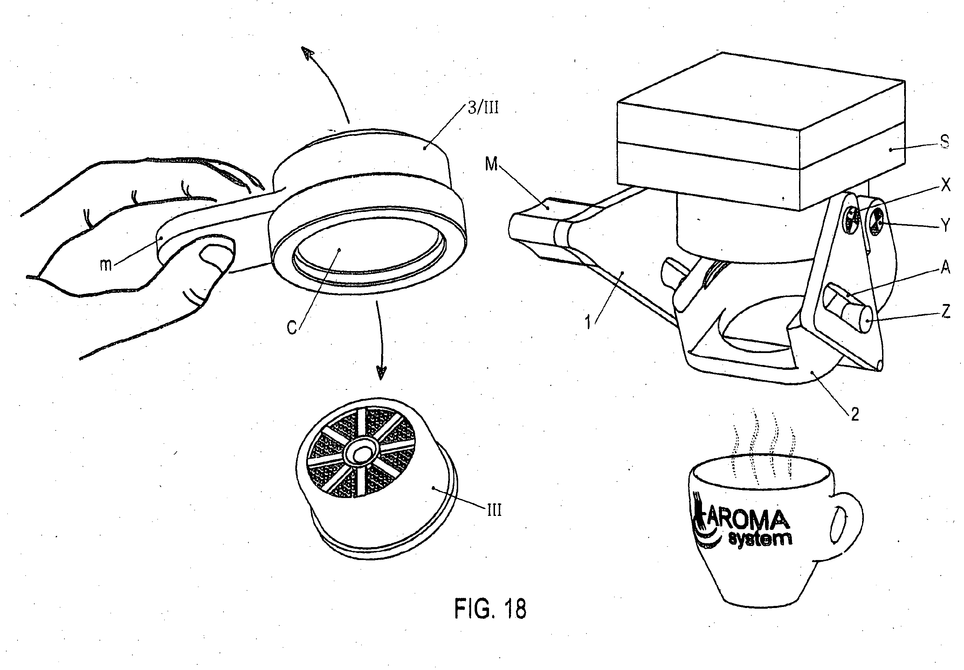

The axonometric figures 15, 16, 17, 18 show the employment of a capsule of different format (III) by changing the spoon-shaped (3/III) paddle.

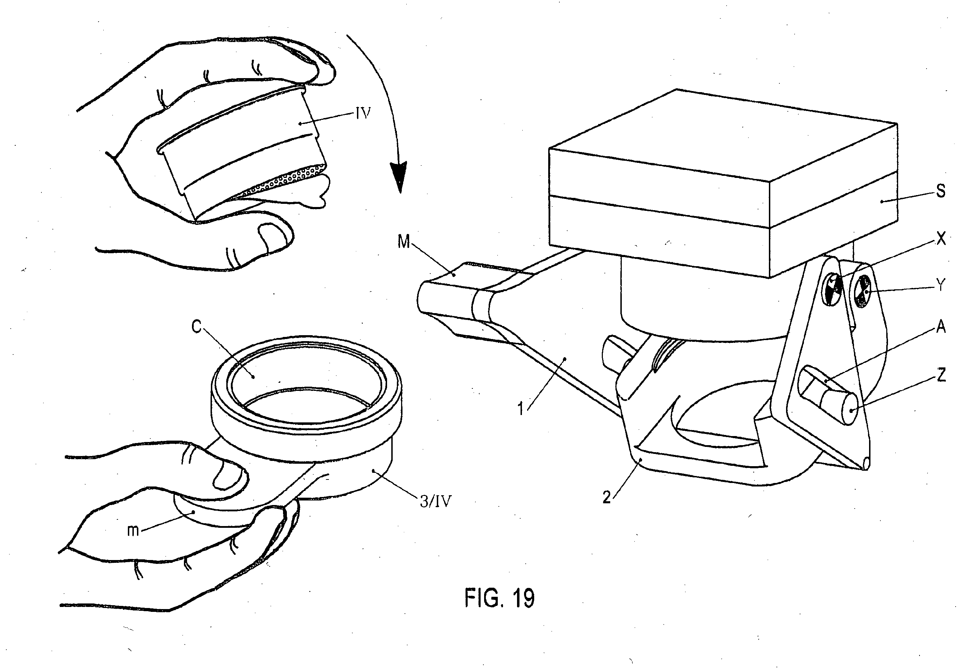

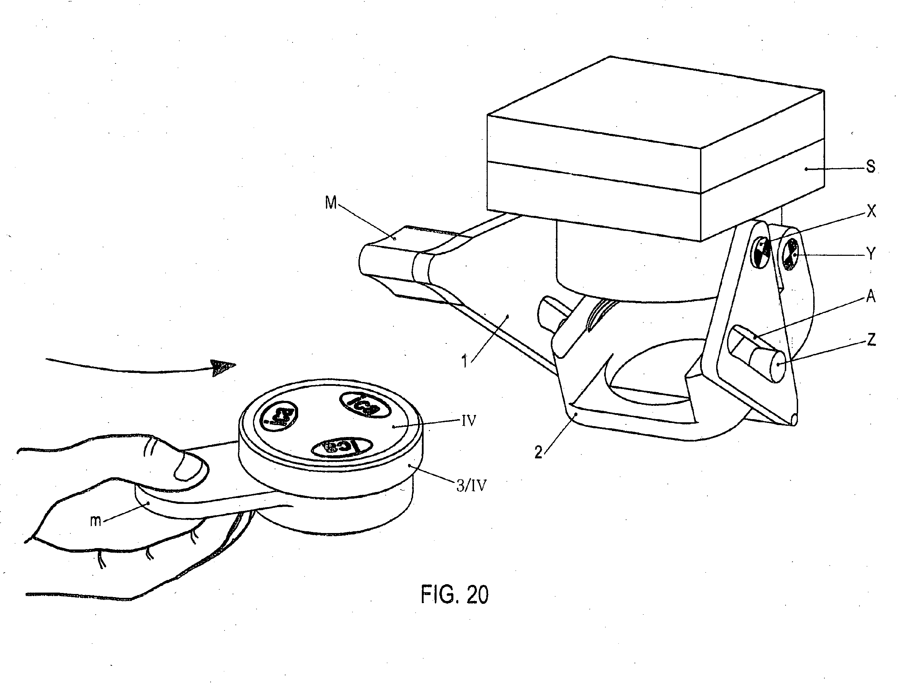

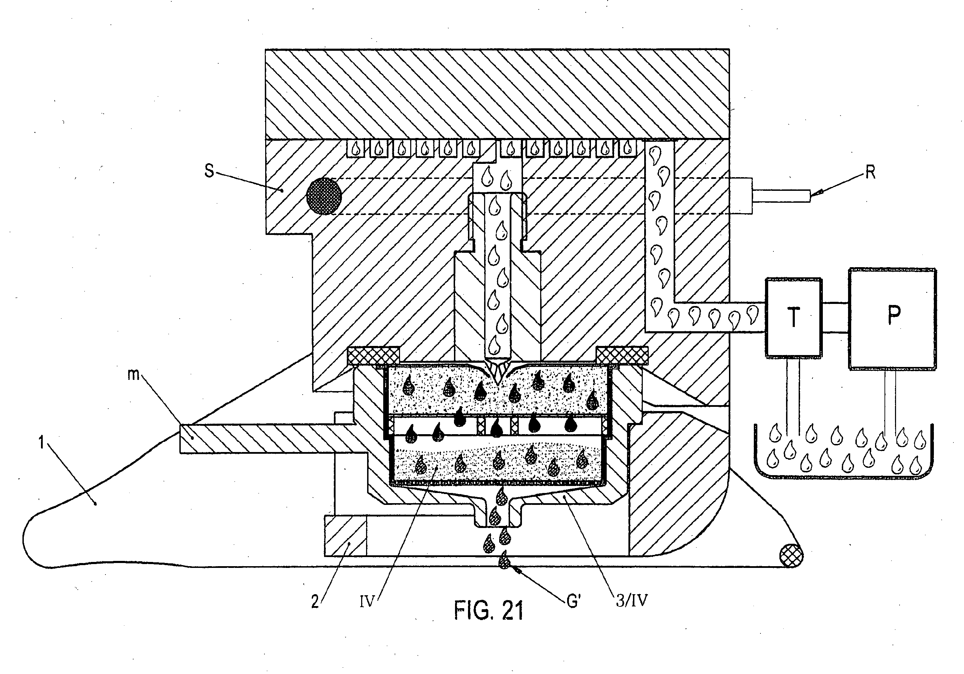

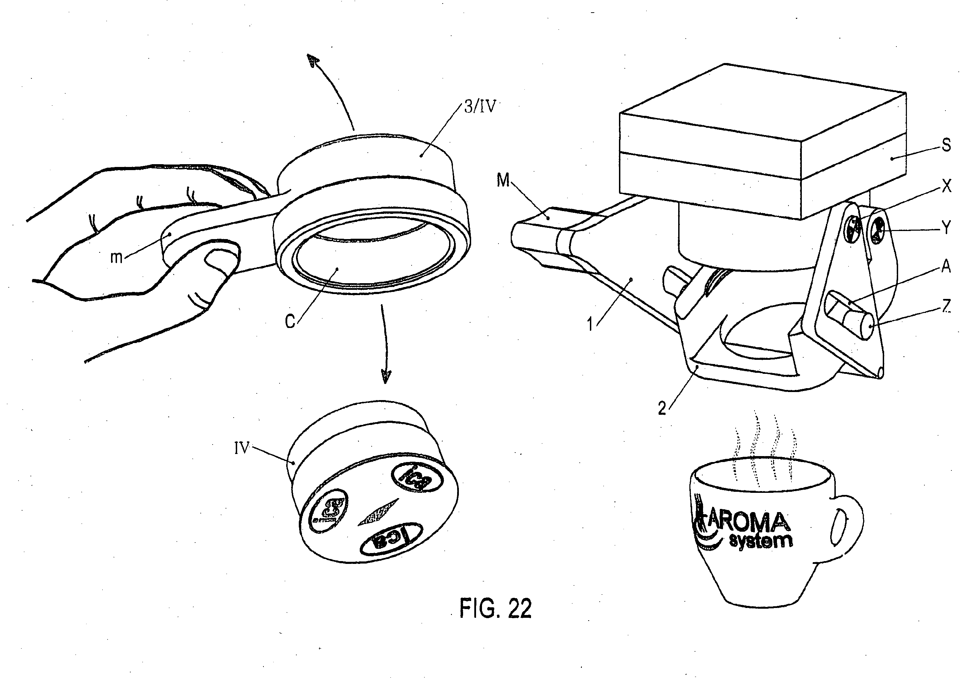

The axonometric figures 19, 20, 21, 22 show the application of a capsule of format (IV) containing two different substances, for example to obtain a beverage like cappuccino or different kinds of infusions composed by more than one granular products or similar products.

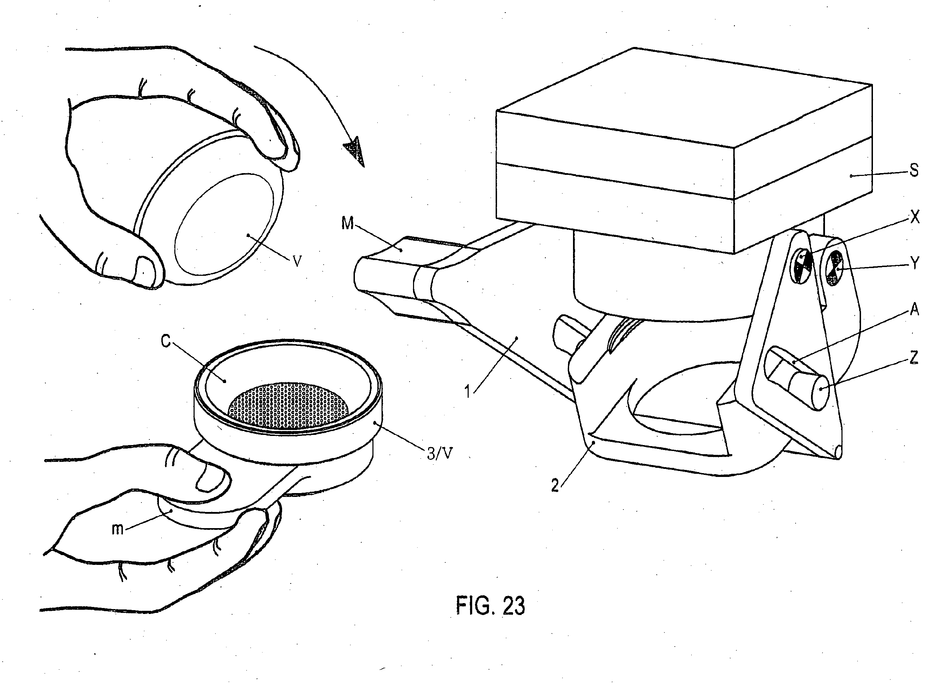

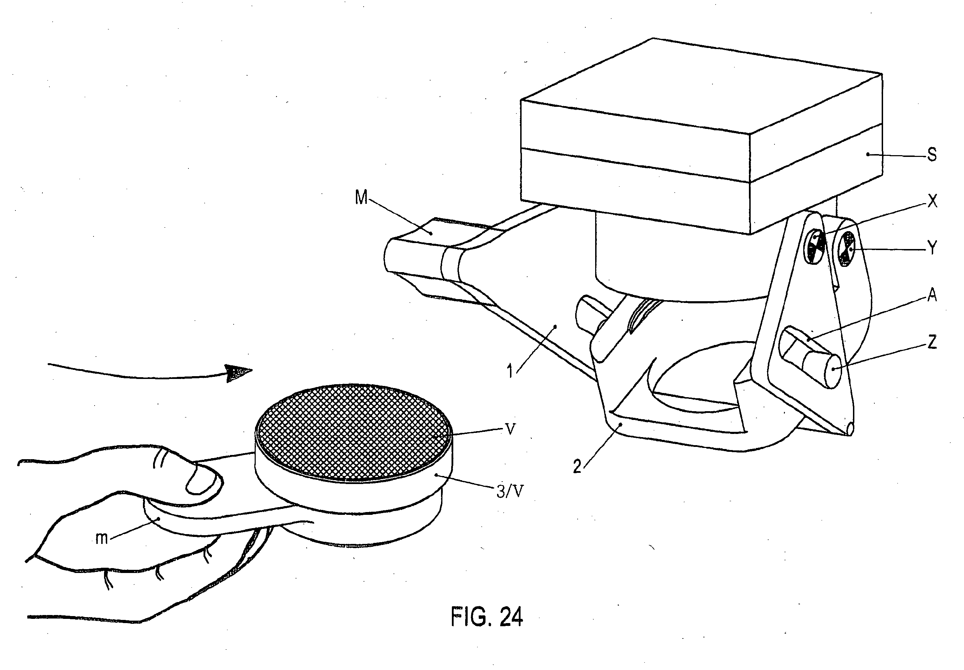

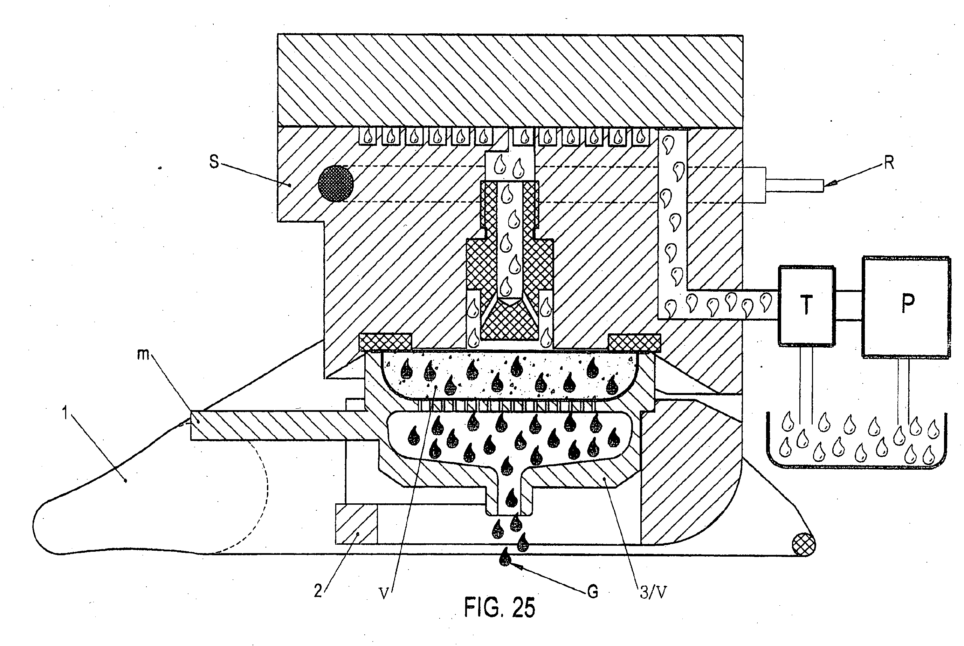

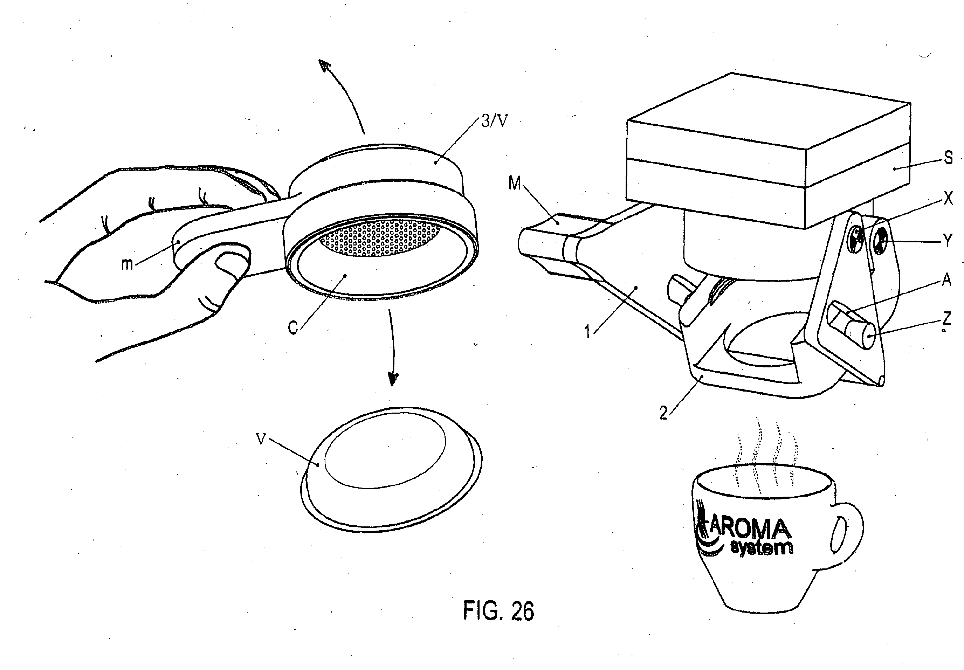

Figure 23, 24, 25, 26 show the application of a paper-filter pad with format (V) inside a spoon of format (3/V).

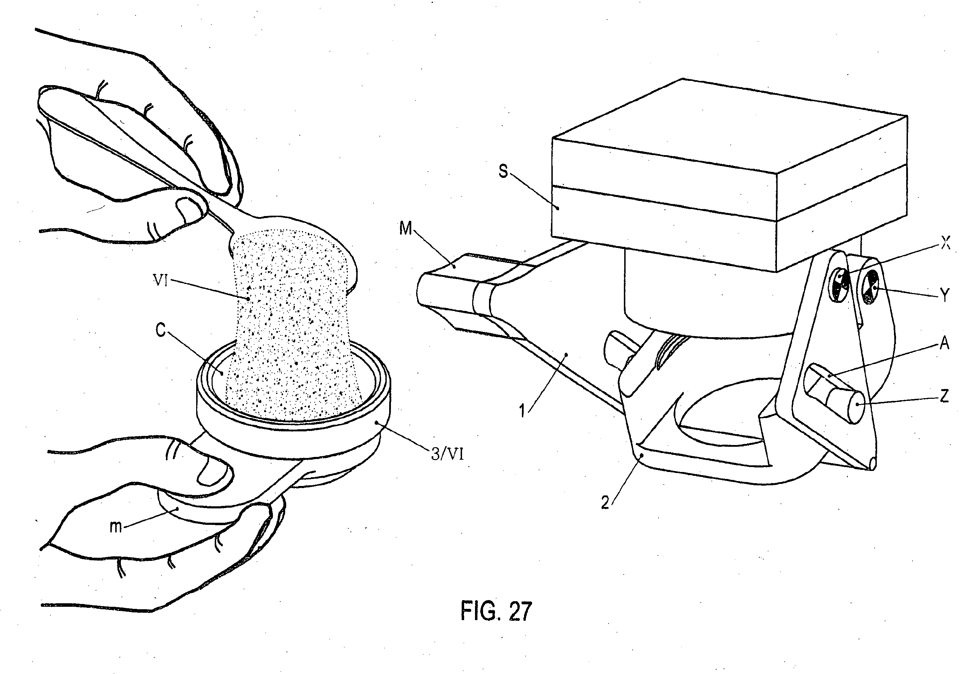

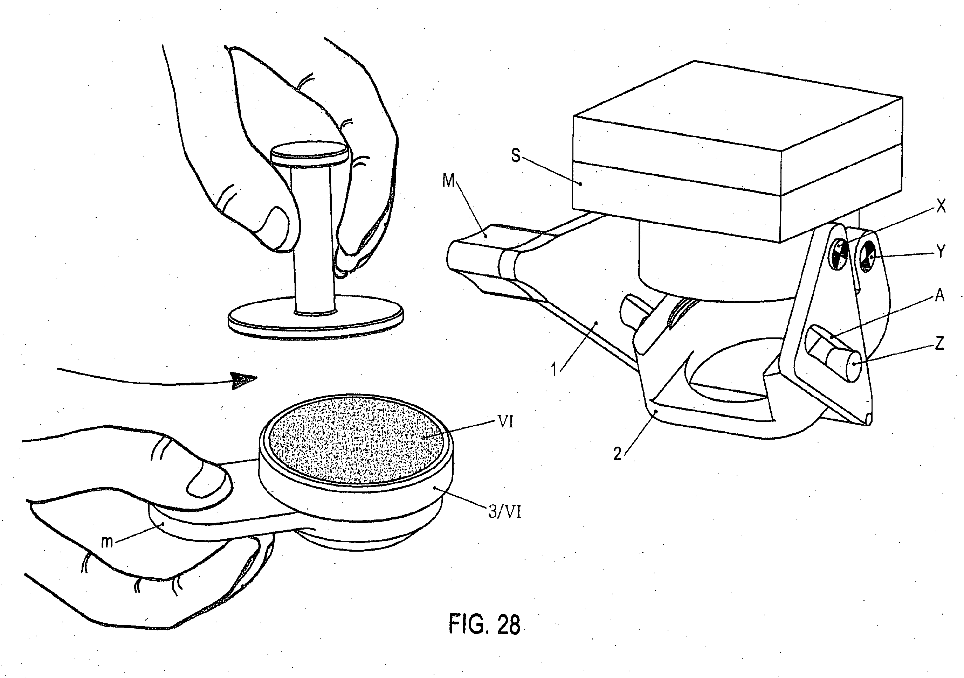

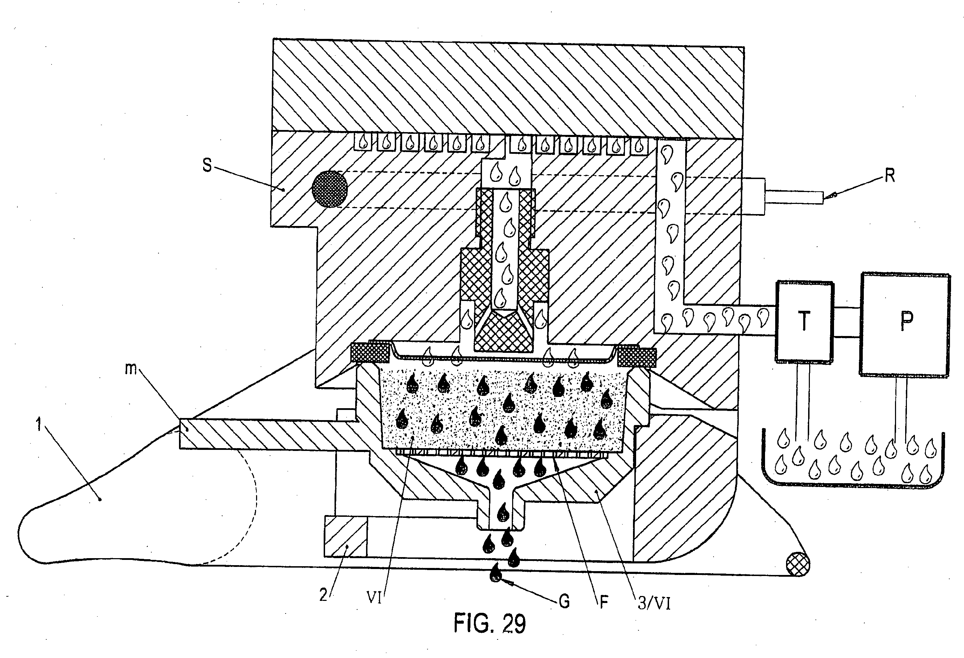

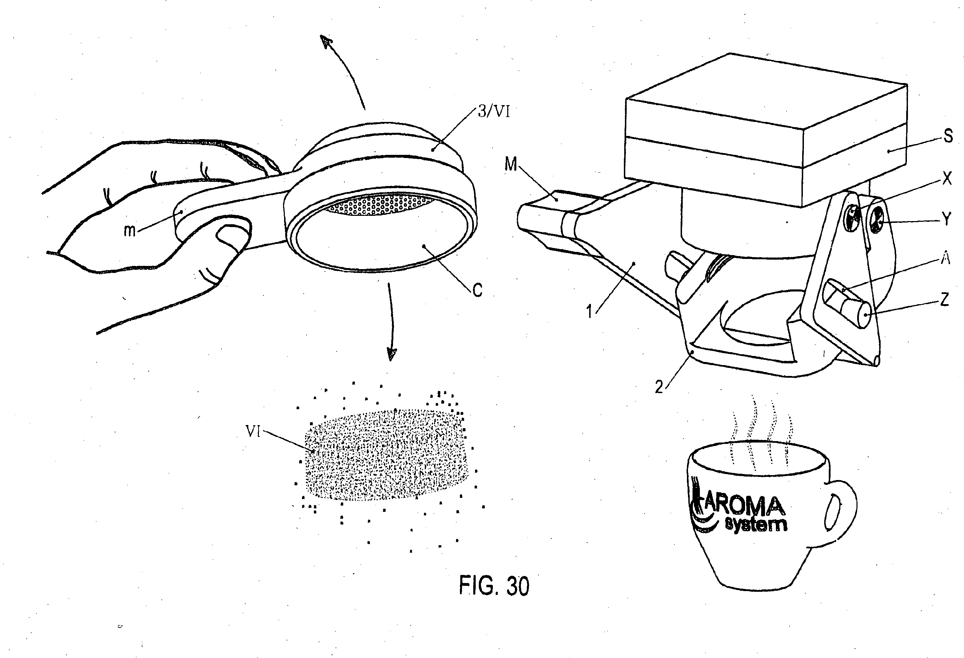

Figures 27, 28, 29, 30 show the use of loose material (VI) inside a sppon of format (3/VI).

In all figures each single detail is marked as follows:
S indicates the bearing structure of the device object of the present invention.
1 indicates a frame swinging around the fulcrum (X) attached to said structure (S).
2 indicates a frame swinging around the fulcrum (Y) attached to said structure (S).
3/I indicates a paddle with a geometry matching to that of the capsule (I).
3/II indicates a paddle with a geometry matching to that of the capsule (II).
3/III indicates a paddle with a geometry matching to that of the capsule (III).
3/IV indicates a paddle with a geometry matching to that of the capsule (IV).
3/V indicates a paddle with a geometry matching to flat of the capsule (V).
3/V indicates a paddle with a geometry matching to that of the capsule (V).
3/VI indicates a paddle with a geometry matching to that of the capsule (VI).
A indicates a profiled slot placed along the side walls of the frame (1).
B indicates a slot that allows the improvement of the accessibility of the paddle in the phases of insertion and extraction from the swinging cradle.
C indicates a spoon-shaped zone of the paddle having different formats.
E1 indicates the angular excursions of the frame (1).
E2 indicates the angular excursions of the swinging cradle (2).
F indicates a pierced diaphragm inserted inside the spoon (C).
G indicates the drops of already infused liquid.
M indicates the handle of the frame (1)
m indicates the handle of the interchangeable paddle (3).
P indicates a pump to make the infusion process liquid circulate.
R indicates an electric resistance.
T indicates a three-ways valve.
v indicates a prepackaged pad.
X, Y, Z indicates the hubs for the operating circulations.

The clearness in the figures highlights the innovative features of the technical solution proposed by the present industrial invention. The inventive core of the prevent invention lies in the easy interchangeability of the different format of packages both in capsules and in pads format, and such versatility is granted by the affordability of the realization of the spoon-shaped paddle, that also allows the employment of loose substances directly loaded and also by the circumstance that said spoon can be easily extracted and is washable after every infusion.

The heuristic gradient that characterizes the invention consists in the combination of the triplet of simple operating elements (1, 2, 3) that allow an extremely versatile practical application and an exceptional operating hygiene, that can be attributed to the ease of washing the element that comes into contact with the infusion.

A further feature is the automatic operations of the cleaning from the limestone incrustations inside the water pipes. After each single infusion operation, the three-ways valve (T) is connected to the drainage pipe and frees all conduits from the residual water of the technological process.

## Claims

1. A device for espresso-like infusions **characterized by** a structure (S) provided with programmable mechanisms to heat up, distribute and inject water into the infusion process, and equipped with a triplet of operating elements (1, 2, 3).
- being the first operating element (1) shaped as a rocking frame articulated on the fulcrums (X) attached to said structure (S) around which it can perform angular excursions (E1) done with the special handle (M);
- being the second operating element (2) shaped as a rocking cradle articulated around the fulcrums (Y), attached to said structure (S) around which it can perform said angular excursions (E2) matching but opposite with the respect to those done by the frame (1) and actuated by means of at least one especially shaped slot (A) preset on the side wall of said rocking frame (1) in which a roll (Z) slides applied to the side of said rocking cradle (2),
- **characterized by** a third operational element (3) interchangeable and shaped as a paddle composed by a concave spoon-like zone (C) fit to contain loose substances or packaged in different formats and by an external handle (m) to allow its steady insertion and the easy extraction by said rocking cradle (2) and
- that the slot (A) presents in the terminal trait a knee-like profile that ensures an irreversible stability to the stance of the frame (1) and of the cradle (2) closures, being such effect increased when the pressures of the infusion process liquid rises.

2. A device according to claim 1, **characterized by** that (figures 9 and 10) a shaped slot (B) allowing to further open the rocking cradle (2) to optimize the insertion and extraction of the paddle (3).

## Patentansprüche

1. Vorrichtung für Brühköpfe wie bei Espressomaschinen, dadurch charakterisiert, dass eine Anordnung (S) mit einer programmierbaren Vorrichtung zum Erhitzen, Verteilen und Einspritzen von Wasser in den Brühprozess, und mit einer Gruppe aus drei Bedienelementen (1, 2, 3) versehen ist,
- wobei das erste Bedienelement (1) die Form eines schwingenden um die Drehachsen (X), die an der Anordnung (S) befestigt sind, beweglichen Gestells aufweist und es durch Betätigen eines speziellen Griffs (M) um die Drehachsen rotatorisch ausgelenkt (E1) werden kann;
- das zweite Bedienelement (2) die Form einer schwingenden um die Drehachsen (Y), die an der Anordnung (S) befestigt sind, beweglichen Halterung aufweist, wobei es um die Drehachsen rotatorisch ausgelenkt (E2) werden kann, die Auslenkungen jedoch den vom Gestell (1) ausgeübten Auslenkungen in entgegengesetzter Richtung entsprechen und mittels wenigstens einer vorher an der Seitenwand des schwingenden Gestells (1) bereitgestellten speziell geformten Aussparung (A), in der ein Rollengleitstück (Z) auf die schwingende Halterung (2) wirkt, gesteuert werden;
- dadurch charakterisiert, dass ein drittes Bedienelement (3), das auswechselbar und als eine aus einem konkaven löffelartigen Bereich (C) bestehende Schaufel geformt ist, die geeignet ist, unverpackte oder in verschiedenen Ausführungen verpackte Substanzen aufzunehmen, und ein äußerer Griff (m), um ein sicheres Einsetzen und das einfache Herausnehmen mittels der schwingenden Halterung (2) zu gestatten, bereitgestellt werden; und
- dass die Aussparung (A) am Ende der Führung ein knieähnliches Profil aufweist, das eine äußerst beständige Befestigung mit der Halterung des Gestells (1) und der Halterungsenden (2) gewährleistet, wobei diese Wirkung mit zunehmendem Druck der Flüssigkeit beim Brühverfahren zunimmt.

2. Vorrichtung nach Anspruch 1, dadurch charakterisiert, dass eine geformte Aussparung (B) (Figuren 9 und 10) ein weiteres Öffnen der schwingenden Halterung (2) gestattet, damit das Einsetzen und Herausnehmen der Schaufel (3) optimiert wird.

## Revendications

1. Dispositif pour infusions de type expresso, **caractérisé par** une structure (S) pourvue de mécanismes programmables pour chauffer, distribuer et injecter de l'eau dans le processus d'infusion, et équipé d'un triplet d'éléments de fonctionnement (1, 2, 3),
- qui est le premier élément de fonctionnement (1) formé en tant que cadre basculant articulé sur les pivots (X) reliés à ladite structure (S) autour desquels il peut réaliser des excursions angulaires (E1) faites avec la poignée spéciale (M) ;
- qui est le deuxième élément de fonctionnement (2) formé en tant que socle basculant articulé autour des pivots (Y), relié à ladite structure (S) autour de laquelle il peut réaliser lesdites excursions angulaires (E2) correspondant à mais opposées par rapport à celles faites par le cadre (1) et actionné au moyen d'au moins une fente de forme spéciale (A) prédéfinie sur la paroi latérale dudit cadre basculant (1) dans laquelle un rouleau (Z) coulisse appliqué sur le côté dudit socle basculant (2),
- **caractérisé par** un troisième élément opérationnel (2) interchangeable et formé en tant que palette composée d'une zone concave de type cuillère (C) ajustée pour contenir des substances en vrac ou emballées sous différents formats et par une poignée externe (m) pour permettre son insertion progressive et l'extraction aisée par ledit socle basculant (2), et
- que la fente (A) présente dans la caractéristique terminale un profil de type genou qui garantit une stabilité irréversible au maintien des fermetures du cadre (1) et du socle (2), un tel effet étant accru lorsque les pressions du liquide du processus d'infusion augmentent.

2. Dispositif selon la revendication 1, **caractérisé par le fait que** (figures 9 et 10) une fente formée (B) permettant d'ouvrir davantage le socle basculant (2) afin d'optimiser l'insertion et l'extraction de la palette (3).
